# EUROPEAN PATENT SPECIFICATION

(11) **EP 4 454 903 B1**
(45) Date of publication and mention of the grant of the patent: **14.01.2026**
(21) Application number: 22910515.0
(22) Date of filing: 04.10.2022
(51) Int. Cl.: B60C 9/18, B60C 9/08, B60C 9/20, B60C 11/01, B60C 9/02, B60C 13/02

(54) **HEAVY-DUTY PNEUMATIC TIRE**
SCHWERLASTLUFTREIFEN
PNEUMATIQUE POUR POIDS-LOURD

(30) Priority: 24.12.2021 JP 2021210405
(43) Date of publication of application: 30.10.2024
(73) Proprietor: BRIDGESTONE CORPORATION, Chuo-ku Tokyo 104-8340 (JP)
(72) Inventor: KATTO Yudai, Tokyo 104-8340 (JP); HASEGAWA Kohei, Tokyo 104-8340 (JP)
(74) Representative: Marks & Clerk LLP
(86) International application number: PCT/JP2022/037149
(87) International publication number: WO 2023/119789

(56) References cited:
- JP-A- 2009 179 147
- JP-A- 2010 006 125
- JP-A- 2016 074 279
- JP-A- 2021 138 312
- JP-A- H04 283 108
- JP-A- H06 143 922
- US-A- 4 282 918
- US-A1- 2019 359 000
- US-A1- 2020 016 934

## Description

### [Technical Field]

The present invention relates to a heavy load pneumatic tire that includes a carcass ply having two curvature change portions where curvature changes in a tire width direction and a cushion rubber positioned between a belt layer and the carcass ply.

### [Background Art]

As a conventional pneumatic tire, known is a tire whose uneven wear resistance performance can be improved by optimizing a shape of a contact patch of the tire (see, Patent Literature 1, for example). In this pneumatic tire, sliding at its shoulder region with respect to a road surface during rolling of the tire is suppressed by the optimization of the contact patch shape of the tire.

For such pneumatic tires, requirements are specified based on a circumferential ground contact length of a tire in order to suppress changes of a shape of its contact patch. This configuration prevents premature uneven wear at its tread edge or its shoulder region.

### [Citation List]

### [Patent Literature]

### [Patent Literature 1]

Japanese Patent Laid-Open Publication No. H9-309301

### [Patent Literature 2]

JP2016074279A discloses a pneumatic tire for heavy load which does not have a peripheral belt layer, a belt layer having a cross-over belt layer formed by stacking a pair of belt plies respectively and an angled belt layer formed of one or more belt plies. An angle θof a belt cord of the cross-over belt layer and an angle θof a belt cord of the angled belt layer satisfies 10° < θ < 25° and 15° < θ-θ<25°, respectively. A shape of a carcass is formed by connecting two arcs differing in radius of curvature from each other, and radii R, Rof curvature of an inside arc and an outside arc which are inside and outside in a tire-width direction satisfy R>R. A distance measured along the tire width direction from a tire equator face to an intersection of the inside arc and outside arc is 80% or larger of a distance obtained by similarly measuring a range where the belt plies of the cross-over belt layer overlap each other.

### [Patent Literature 3]

JP2010006125A discloses a pneumatic tire when filling standard air pressure by being installed on a standard rim is viewed in a cross section, assuming a distance up to a maximum diameter position of a carcass from a reference line passing through the inside end in the tire radial direction of a bead core as H, a maximum width of the carcass as S, a distance up to a tire maximum width position from the reference line as h0, and a distance measured in the tire radial direction up to an end part of the outermost belt ply from a tire maximum diameter position of the outermost belt ply in the tire radial direction as h1, a carcass shape is set so as to satisfy 0.52 ≤ h0/H ≤ 0.55 and h1/H ≤ 0.03. Ply tension of the carcass is uniformized, and abrasion resistance on the shoulder side of a tread is improved. When filling internal pressure, a belt shape is flattened, and a strain energy loss inside of the tire is reduced, and the rolling resistance is reduced.

### [Patent Literature 4]

JP2021138312A discloses a pneumatic tire wherein a carcass line in the application of 10% of normal inner pressure is composed of a curve W positioned in a tread part and curved so as to project toward the outside in a tire radial direction, and a curve S positioned in a side wall part and curved so as to project toward the outside in a tire width direction. An inclination θW of the curve W and an inclination θS of the curve S in a connection point V in which the curve W and the curve S are connected satisfy a relation of |θW-θS| ≥ 5°, and the connection point V is arranged in the inside in the tire width direction of a point A corresponding to an outer end point of an effective width of a pair of cross belts.

### [Patent Literature 5]

JPH04283108A discloses a tire wherein an aspect ratio H/W in a standard state is made not more than 0.7, and the distance in a tire axial direction from the equatorial point on a tread surface till a grounding outer point where at the outer end point in a tire axial direction of the grounding surface that grounds when a regular load is added to a tire positions on the tread surface at the time of no load is made as grounding half width SL. And, the distance in a tire radial direction between a reference point that is distant from the grounding outer point inward in a tire axial direction and the equatorial point is made as the height Y between the tread equator and the reference point. Here, the tire is formed so that the height Y between the tread equator and the reference point becomes as Y=0.042SL + 3.669 with respect to the grounding half width SL.

### [Patent Literature 6]

JPH06143922A discloses a tire rimmed with a regular rim and filled with regular internal pressure wherein, the ground contacting width SW is set to 0.7-0.9 times the maximum width of a tire, the ply width BWM of the maximum width belt ply to 0.84-1.2 times or more the ground contacting width SW and the ratio BWM/TW of the ply width BWM to the maximum width TW of the tire to 0.69 or more. Further, in the inside portion and outside portion obtained by cutting the ply width BWM into quarters, the inner surface of the outside portion is formed of an arc having the radius of curvature of 2.0-2.8 times the maximum width TW of the tire.

### [Patent Literature 7]

JP2009179147A discloses a pneumatic tire that comprises a carcass that is extended from a tread part through a shoulder part and a side wall part to a bead part. As it is installed on an authorized rim, with 10% of maximum air pressure charged, the carcass at the shoulder part has a radius of curvature R within a range of 0.74×compression ratio ≤ R/Xc ≤ 0.80×compression ratio to size Xc of 1/2 of the tire width direction maximum width of the carcass. In the pneumatic tire, growth of outer diameter of the shoulder part is promoted, while quantity of growth of outer diameter in the tire width direction is equalized. As a result, uneven abrasion or groove cracking of the tread part around the shoulder part can be restricted, thus improving durability.

### [Patent Literature 8]

US2019359000A1 discloses a pneumatic tire that includes a carcass layer and a belt layer disposed outward of the carcass layer in the tire radial direction, and also includes, in a tread surface thereof, a plurality of circumferential main grooves and a plurality of land portions defined by the circumferential main grooves. In addition, when the tire is mounted on a specified rim, is inflated to 5% of a specified internal pressure, and is in an unloaded state, upon defining points P1, P2, and P3 on a carcass profile, a distance Da in the tire radial direction from an intersection point P1 to a point P2 and a distance Db in the tire radial direction from the point P2 to a point P3 have a relationship of Db ≤ Da.

### [Patent Literature 9]

US4282918A discloses a pneumatic tire having a carcass ply of metal cords arranged and embedded in the radial direction in a rubber. This carcass ply has a natural sectional profile, and the position of the carcass ply in the shoulder portion of the tire satisfies the requirement of 0.3 < /=t2/t1 < /=1.0 in which t2 designates the thickness of the tire inside the carcass ply and t1 designates the thickness of the tire outside the carcass ply. In this shoulder portion, the thickness of an inner liner layer inside the carcass cord is gradually reduced toward the center of the tire top and the maximum width position of the tire. This pneumatic tire is preferably used for a high-load vehicle.

### [Patent Literature 10]

US2020016934A1 discloses a tire wherein the aspect ratio of the tire is not greater than 75%. The tire includes: a carcass extending from one bead to the other bead; a belt located between a tread and the carcass; and a cushion layer located between an end of the belt and the carcass. Each bead includes a core and an apex. The zone from the inner end of the cushion layer to the outer end of the apex is a flexible zone. The ratio of a length F in the radial direction of the flexible zone to a cross-sectional height A of the carcass is not less than 0.25 and not greater than 0.4.

### [Summary of Invention]

### [Technical Problem]

The above conventional pneumatic tire has a configuration in which a circumferential ground contact length of the tire is optimized even after a shape of its contact patch changes due to an increase of its travel distance (it may be referred to as growth due to an increase of a travel distance, same applies hereinafter). However, when ground pressure is secured at its shoulder end in the above configuration, the optimization of the circumferential contact length of the tire may improve its uneven wear resistance performance, but may increase thickness of a rubber layer at the shoulder region. As the result, heat generation in the shoulder region increases during rolling of the conventional pneumatic tire, and thereby its thermal degradation of the shoulder region will progress and durability of the tire may be degraded.

An object of the present invention is to provide a heavy load pneumatic tire that can suppress degradation of endurance of the tire due to heat generation in its rubber layer while improving its uneven wear resistance performance after changes of a shape of a contact patch due to an increase of a driving distance of the tire.

### [Solution to Problem]

A heavy load pneumatic tire according to one embodiment of the present invention is according to claim 1.

### [Advantageous Effects of Invention]

In the above configuration, the curvature radius of the second portion of the carcass ply is reduced. By this configuration, a ground pressure in a vicinity of a tread edge in the tire width direction is reduced, and the ground pressure is made uniform in the tire width direction. Then, changes of a shape of a contact patch of the tire caused by growth due to an increase of a travel distance is suppressed. In addition, in this configuration, there is no need to increase a thickness of a rubber layer to optimize the shape of the contact patch. Therefore, the decrease in durability of the tire caused by an increase of heat generation in a shoulder region during rolling of the tire can also be suppressed. Furthermore, the cushion rubber is located between the belt layer and the carcass ply in the second segment. Therefore, the ground pressure in this segment in the vicinity of the tread edge can be made more uniform in the tire width direction and uneven wear can be effectively suppressed.

### [Brief Description of Drawings]

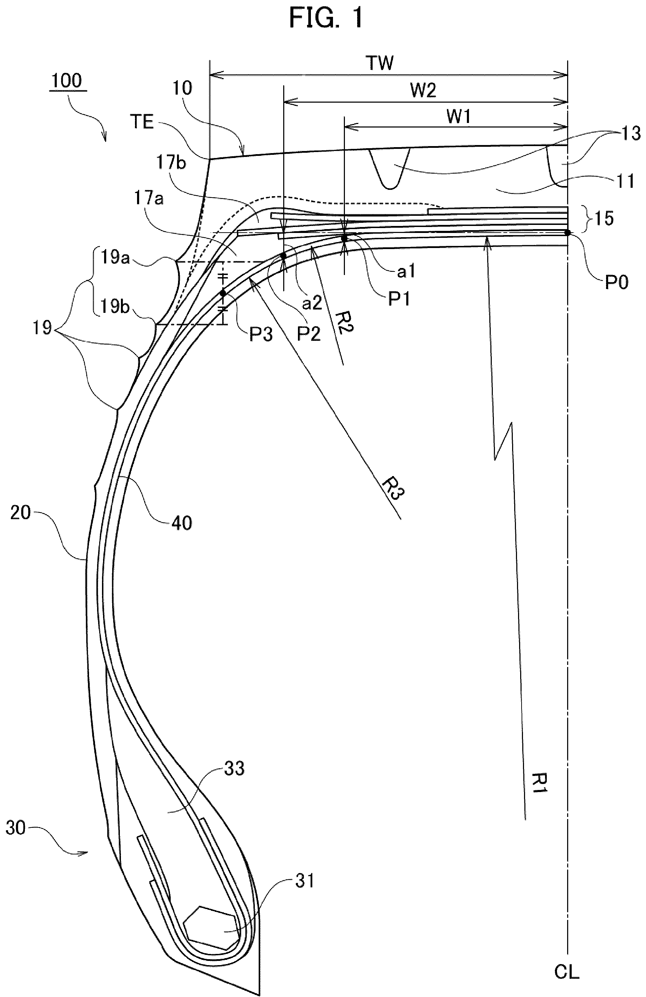

[Fig. 1] Fig. 1 is a cross-sectional view of a heavy load pneumatic tire 100 on a cross section determined by its tire width direction and its tire radial direction.

### [Description of Embodiments]

Hereinafter, an embodiment will be described based on the drawings. Note that the same functions and structures are denoted by the same or similar reference numerals, and their description will be omitted accordingly.

### (1) Overall Schematic Configuration of Tire

Fig. 1 is a cross-sectional view of a heavy load pneumatic tire 100 according to the present embodiment on a cross section determined by its tire width direction and its tire radial direction. Note that Fig. 1 shows only one side with respect to a tire equator line CL. The configuration of the heavy load pneumatic tire 100 may be symmetrical with respect to the tire equator line CL. Cross-sectional hatchings are omitted in Fig. 1 (same applies hereinafter).

A tread pattern is formed on a tread section 10 according to performance required for the tire. In the present embodiment, the tire is the heavy load pneumatic tire that can be especially suitable for trucks and buses (TB) that travel long distances.

Note that a heavy load pneumatic tires are not necessarily for trucks and buses, but may be used for other types of vehicles, such as vans and light trucks, for example.

The heavy load pneumatic tire 100 according to the one embodiment includes a tread section 10 to be contacted with a road surface, tire side sections 20, bead sections 30, a carcass ply 40, and a belt layer 15. The tire side section(s) 20 extends from the tread section 10 and is located inside the tread section 10 in the tire radial direction. The bead section(s) 30 extends from the tire side section 20 and is located inside the tire side section 20 in the tire radial direction. The carcass ply 40 is mounted from the tread section 10 through the tire side section(s) 20 to the bead section(s) 30 and forms a framework of the tire. The belt layer 15 is disposed in the tread section 10 and is located outside the carcass ply 40 in the tire radial direction.

As shown in Fig. 1, the carcass ply 40 includes a first segment P0-P1 that contains a tire equator line CL, a second segment P1-P2 that is located outside the first segment P0-P1 in the tire width direction and inside the first segment P0-P1 in the tire radial direction, and a third segment P2-P3 that is located inside the second segment P1-P2 in the tire radial direction. On the cross section determined by the tire width direction and the tire radial direction, a curvature of the second segment P1-P2 is larger than a curvature of the first segment P0-P1. A first curvature change portion P1 is defined as a boundary between the first segment P0-P1 and the second segment P1-P2 where the curvature on the cross section determined by the tire width direction and the tire radial direction changes. On the above cross section, a curvature of the third segment P2-P3 is smaller than the curvature of the second section P1-P2. The second curvature change portion P2 is defined as a boundary between the second segment P1-P2 and the third segment P2-P3 where the curvature changes on the cross section determined by the tire width direction and the tire radial direction.

The heavy load pneumatic tire 100 further includes a cushion rubber 17a that is disposed between the carcass ply 40 and the belt layer 15. An inner edge of the cushion rubber 17a in the tire width direction is located at the first curvature change portion P1.

The tread section 10 has a tread rubber 11 that includes a tread surface which is a portion to be in contact with the road surface (not shown in the figures). A pattern is formed on the tread surface according to usage environment of the heavy load pneumatic tire 100 and a vehicle type to which it is mounted. In the present embodiment, as shown in Fig. 1, as an example, a pattern is illustrated in which circumferential grooves 13 extending in a circumferential direction of the tire are located on the tire equator line position CL and at positions distanced from the tire equator line CL in the tire width direction.

The tire side section 20 extends from the tread section 10 and is located inside the tread section 10 in the tire radial direction. The tire side section 20 is a side section with respect to the tread section 10, specifically an area from an outer edge of the tread section 10 in the tire width direction to an outer edge of the bead section 30 in the tire radial direction. The tire side section 20 also includes a tire side rubber. Note that the tire side section 20 is sometimes referred to as a sidewall or the like.

In a shoulder region where the tire side section 20 extends from the tread section 10, provided are plural protrusions 19 that protrude outward in the tire width direction from a tire surface and extend in a circumferential direction. The protrusions 19 have a triangular cross-sectional shape, respectively.

The bead section 30 extends from the tire side section 20 and is located inside the tire side section 20 in the tire radial direction. The bead section 30 includes a bead core 31 and a bead filler 33, and is formed to be annular. The bead filler 33 is made of rubber material and become gradually thinner from the bead core 31 outwardly in the tire radial direction.

The carcass ply 40 forms the framework of the heavy load pneumatic tire 100. The carcass ply 40 has a radial structure in which carcass cords (not shown in the figures) are arranged radially along the tire radial direction. However, it is not limited for the carcass ply 40 to have a radial structure. For example, the carcass ply 40 may have a bias structure in which carcass cords are arranged to intersect in the tire radial direction. As shown in Fig. 1, the carcass ply 40 in the present embodiment is mounted from the tread section 10 through the tire side section 20 to the bead section 30. In the bead section 30, the carcass ply 40 is folded from the inside of the tire width direction to the outside of the tire width direction around the bead core 31.

The carcass cords of the carcass ply 40 may be steel cords or may have multiple plies made of organic fiber cords such as aramid, nylon, rayon, polyester, etc.

The belt layer 15 is disposed inside the tread section 10 in the tire radial direction. The belt layer 15 is located outside the carcass ply 40 in the tire radial direction in the tread section 10. The belt layer 15 includes a pair of crisscross belts whose cords are crisscross and a reinforcing belt provided outside the crisscross belts in the tire radial direction. Note that the belt layer 15 is formed by stacking multiple belts along the tire circumferential direction as shown in Fig. 1.

In addition to steel cords, organic fiber cords such as aramid, nylon, rayon, and polyester can be used as belt cords in the belt layer 15.

The cushion rubber 17a is disposed between the carcass ply 40 and the belt layer 15. The inner edge of the cushion rubber 17a in the tire width direction is located at the first curvature change portion P1.

In the present embodiment, the inner edge of the cushion rubber 17a in the tire width direction is located at the first curvature change portion P1, which is a position in the tire width direction where a distance in the tire radial direction between the carcass ply 40 and the belt layer 15 begins to widen. That is, the first curvature change portion P1 is the boundary where the difference in curvature between the carcass ply 40 and the belt layer 15 occurs.

An outer edge of the cushion rubber 17a in the tire width direction is located at an end position of the belt layer 15, which is its outermost edge in the tire width direction, or located at an outer position in the tire width direction from the end position.

The cross-sectional shape of the cushion rubber 17a on the cross section determined by the tire width direction and the tire radial direction is an almost triangular shape whose width in the tire radial direction increases from the center in the tire width direction toward the outer side in the tire width direction, as shown in Fig. 1. In the present embodiment, lower and upper ends of the cushion rubber 17a in the radial direction are in contact with the carcass ply 40 and the belt layer 15, respectively.

The cushion rubber 17a may be made of soft cross-linked rubber, for example. The cushion rubber 17a absorbs stresses generated near the edge of the belt layer 15, and thereby suppresses uneven wear near a tread edge TE while suppressing damage to the tread section 10 starting from the edge of the belt layer 15. An elastic modulus of the soft cross-linked rubber that forms the cushion rubber 17a may be 1.0 to 4.5 MPa.

The tread edge TE is the outermost position in the tire width direction of the surface where the tread section 10 contacts the road surface. For example, the tread edge TE may be determined based on the ground contact edge of the tread section 10 in a state where the heavy load pneumatic tire 100 to which a regulated internal pressure is applied and to which a regulated load are loaded is contacted with the flat ground surface with a camber angle of 0 degrees.

Here, the regulated internal pressure is an air pressure corresponding to the maximum load capacity in a Year Book of the JATMA (Japan Automobile Tyre Manufacturers Association, Inc) in Japan. The regulated load is the maximum load capacity (maximum load) corresponding to the maximum load capacity (load index) in the Year Book of the JATMA. In addition, it corresponds to the ETRTO in Europe, to the TRA in the U.S., and to other tire standards in other countries.

In the present embodiment, a second cushion rubber 17b is also disposed outside in the tire radial direction. The second cushion rubber 17b covers the outer edge of the belt layer 15 in the tire width direction. The second cushion rubber 17b covers the outer edge of the belt layer 15 in the tire width direction and contacts the cushion rubber 17a disposed outside in the tire width direction and inside in the tire radial direction. This configuration prevents separation of a ply edge in the heavy load pneumatic tire 100.

The heavy load pneumatic tire 100 is assembled so that the bead section 30 is engaged with a rim flange (not shown in the figures) of a rim wheel. An internal space formed by the assembly to the rim wheel is filled with air. However, gas filled into the internal space is not limited to air, but may also be inert gas such as nitrogen gas.

### (2) Profile of Carcass Ply

Next, a profile of the carcass ply 40 is described. As shown in Fig. 1, on the cross section determined by the tire width direction and the tire radial direction, the carcass ply 40 has the first curvature change portion P1, where the curvature of the carcass ply 40 differs between its inside and outside in the tire width direction, at its own portion determined by a distance W1 from the equator line CL in the tire width direction. Furthermore, the carcass ply 40 has the second curvature change portion P2 located between the first curvature change portion P1 and the tread edge TE of the tread section 10, where the curvature of the carcass ply 40 differs between its inside and outside in the tire width direction, at its own portion determined by a distance W2 from the equator line CL in the tire width direction.

That is, the carcass ply 40 has the first segment P0-P1 containing the tire equator line CL, which is the segment of the carcass ply 40 between the point P0 on the tire equator line CL and the first curvature change portion P1, as shown in Fig. 1. In the first segment P0-P1, the carcass ply 40 is curved with a curvature radius R1. The carcass ply 40 has the second segment P1-P2 between the first curvature change portion P1 and the second curvature change portion P2. The second segment P1-P2 is located outside the first segment P0-P1 in the tire width direction and inside the first segment P0-P1 in the tire radial direction. In the second segment P1-P2, the carcass ply 40 is curved with a curvature radius R2 smaller than the curvature radius R1 of the first segment P0-P1. That is, the first curvature change portion P1 is the boundary between the first segment P0-P1 and the second segment P1-P2 whose curvature is larger than that of the first segment P0-P1 on the cross section determined by the tire width direction and the tire radial direction. The carcass ply 40 has a larger curvature outside the first curvature change portion P1 in the tire width direction.

The carcass ply 40 has the third segment P2-P3 located inside the second curvature change portion P2 in the tire radial direction. In the third segment P2-P3, the carcass ply 40 is curved with a curvature radius R3 larger than the curvature radius R2 of the second segment P1-P2. That is, the second curvature change portion P2 is the boundary between the second segment P1-P2 and the third segment P2-P3 whose curvature is smaller than that of the second segment P1-P2 on the cross section determined by the tire width direction and tire radial direction. The carcass ply 40 has a smaller curvature inside the second curvature change portion P2 in the tire radial direction.

The cross-sectional shape of the carcass ply 40 may satisfy a relational expression 1: 0.5 ≤ W1/TW ≤ 0.8 and a relation expression 2: W1/TW < W2/TW < 1. Here, the cross section for regulating the cross-sectional shape of the carcass ply 40 is the cross section, determined by the tire width direction and the tire radial direction, of the heavy load pneumatic tire 100, which is mounted on a regulated rim (not shown in the figures), to which the regulated internal pressure is applied, and to which no load is applied. The sign W1 is the distance in the tire width direction from the tire equator line CL to the first curvature change portion P1. The sign W2 is the distance in the tire width direction from the tire equator line CL to the second curvature change portion P2. The sign TW is a distance in the tire width direction from the tire equator line CL to the tread edge TE.

Here, the regulated rim is a rim wheel that corresponds to the standard rim in the Year Book of the JATMA (Japan Automobile Tyre Manufacturers Association, Inc.) in Japan. In addition, it corresponds to the ETRTO in Europe, to the TRA in the U.S., and to other tire standards in other countries.

The cross-sectional shape of the carcass ply 40 may further satisfy a relational expression 3: a1/W1 ≤ 0.06 < a2/W2 ≤ 0.15. Here, the sign a1 is a distance in the tire radial direction from a height position of the carcass ply 40 on the tire equator line CL to a height position of the first curvature change portion P1. The sign a2 is a distance in the tire radial direction from the height position of the carcass ply 40 on the tire equator line CL to a height position of the second curvature change portion P2.

Note that the cross section of the carcass ply 40 determined by the tire width direction and the tire radial direction has a cross-sectional shape that intersects the tire equator line CL and smoothly passes through the position P0, the first curvature change portion P1 and the second curvature change portion P2 on the carcass ply 40.

Here, the curvature radius R1 of the first segment P0-P1 is a curvature radius of the cross-sectional shape of the carcass ply 40 between the position P0 on the tire equator line CL and the first curvature change portion P1. The curvature radius R2 of the second segment P1-P2 is a curvature radius of the cross-sectional shape of the carcass ply 40 between the first segment P1 and the second segment P2. The cross-sectional shape of the carcass ply 40 is a shape that smoothly passes through the three points of the position P0, the first curvature change portion P1 and the second curvature change portion P2. Furthermore, the cross-sectional shape of the carcass ply 40 is determined so as to satisfy the relational expressions 1 and 2. According to this configuration, the range of possible curvature radii R1 and R2 of the first segment P0-P1 and the second segment P1-P2 of the carcass ply 40 is determined. Note that the range of possible curvature radii R1 and R2 may be defined as the range satisfying not only the relational expressions 1 and 2 but also the relational expression 3.

The cross-sectional shape of the carcass ply 40 may satisfy a relational expression 4: R2/R3 ≤ 0.5. Here, the sign R3 is a curvature radius of the cross-sectional shape of the carcass ply 40 (the third segment P2-P3) between the second curvature change portion P2 and the portion P3 located inside the area where the plural protrusions 19 formed on the tire surface are located in the tire width direction. Note that, in the carcass ply 40, the radial position of the portion P3, which is the inner edge of the third segment P2-P3 in the tire radial direction, may be set at a middle position between a radial position of the first protrusion 19a, which is located at the outer end in the tire radial direction among the plural protrusions 19, and a radial position of the second protrusion 19b adjacent to the first protrusion 19a. In the present embodiment, as shown in Fig. 1, the portion P3 is located at a radial position that is a midpoint (the center position in the tire radial direction) between the radial position of the first protrusion 19a and the radial position of the second protrusion 19b.

### (3) Functions and Advantages

Generally, in heavy load tires for trucks and buses, its circumferential ground contact length in a vicinity of the tread edge is shorter than its circumferential ground contact length in a range from the tire equator line to a position inside the vicinity of the tread edge in the tire width direction. Therefore, in heavy load tires for trucks and buses, its ground pressure in the vicinity of the tread edge is relatively lower than its ground pressure in the range containing the tire equator line. In this case, the vicinity of the tread edge is dragged when the tire rolls, and abnormal wear such as stepped wear, in which the vicinity of the tread edge wears in a stepped shape, may occur. Even when the tire is used under conditions where such stepped wear is suppressed, the circumferential ground contact length changes as the travel distance of the tire increases. Specifically, an intermediate portion between the tire equator line and the vicinity of the tread edge grows relatively large as the travel distance increases and the circumferential ground contact length at the intermediate portion becomes longer. As a result, the ground pressure in the vicinity of the tread edge becomes relatively lower than that at the intermediate portion, which may cause uneven wear.

In the heavy load pneumatic tire 100 according to the present embodiment, the carcass ply 40 includes the first segment P0-P1 containing the tire equator line CL, the second segment P1-P2 located outside the first segment P0-P1 in the tire width direction and inside the first segment P0-P1 in the tire radial direction, and the third segment P2-P3 located inside the second segment P1-P2 in the tire radial direction. The curvature of the second segment P1-P2 is larger than the curvature of the first segment P0-P1 on the cross section determined by the tire width direction and the tire radial direction. The first segment P1 is defined as the boundary between the first segment P0-P1 and the second segment P1-P2 where the curvature changes on the cross section determined by the tire width direction and the tire radial direction. The curvature of the third segment P2-P3 is smaller than the curvature of the second segment P1-P2 on the above cross section. The second curvature changing portion P2 is defined as the boundary between the second segment P1-P2 and the third segment P2-P3 where the curvature changes on the cross section determined by the tire width direction and the tire radial direction. That is, the curvature radius R1 of the first segment P0-P1 is larger than that of the second segment P1-P2. And the curvature radius R2 of the second segment P1-P2 is smaller than the curvature radius R3 of the third segment P2-P3.

The growth, due to increase of the traveling distance, caused by the internal pressure of the tire is promoted in the areas where the curvature radius is relatively large (the first segment P0-P1 and the third segment P2-P3) and is suppressed in the area where the curvature radius is relatively small (the second segment P1-P2). Therefore, excessive growth due to increase of the traveling distance is suppressed at the intermediate portion between the tire equator line CL and the vicinity of the tread edge TE where the second segment P1-P2 is included. Therefore, in the heavy load pneumatic tire 100 according to the present embodiment, the circumferential ground contact length can be optimized along the tire width direction without increasing the thickness of the rubber layer in the vicinity of the tread end TE (the shoulder region). In other words, according to the present embodiment of the heavy load pneumatic tire 100, degradation of endurance performance of the tire due to heat generation of the rubber layer can be suppressed while improving uneven wear resistance performance after the growth due to increase of the traveling distance.

Furthermore, the heavy load pneumatic tire 100 according to the present embodiment includes the cushion rubber 17a disposed between the carcass ply 40 and the belt layer 15. The inner edge of the cushion rubber 17a in the tire width direction is located at the first curvature change portion P1.

The cushion rubber 17a is disposed outside the first curvature change portion P1 in the tire width direction, specifically, disposed at least at a part of the second segment P1-P2. As a result, the ground pressure is further reduced at the position where the cushion rubber 17a is disposed within the above-mentioned intermediate portion. Therefore, uneven wear, which is caused by dragging the vicinity of the tread edge TE during rolling of the tire, can be further suppressed.

In addition, as shown in Fig. 1, in a case where the outer edge in the tire width direction of a radially outer portion of the cushion rubber 17a reaches the outer edge of the belt layer 15 in the tire width direction, the movement of the outer edge of the belt layer 15 in the tire width direction can be suppressed and thereby the rubber layer(s) in its vicinity can be prevented from being damaged.

In addition, in case where the cross-sectional shape of the carcass ply 40 of the heavy load tire 100 for trucks and buses satisfies the relational expression 0.5 ≤ W1/TW ≤ 0.8 and the relational expression W1/TW < W2/TW < 1, it becomes possible to effectively suppress the growth due to increase of the traveling distance at inner portions, in the tire width direction, of shoulder land blocks adjacent to the tread edge TE. Here, the cross-sectional shape of the 40 carcass ply is a cross-sectional shape of the heavy load pneumatic tire, which is mounted on the regulated rim, to which the regulated inner pressure is applied, and to which no load is applied, on the above-mentioned cross section.

In addition, the distance in the tire radial direction from the height position in the tire radial direction of the carcass ply 40 at the position (P0) of the tire equator line CL to the height position in the tire radial direction of the first curvature change portion P1 is denoted as a1. And the distance in the tire radial direction from the height position in the tire radial direction of the carcass ply 40 at the position (P0) of the tire equator line CL to the height position in the tire radial direction of the second curvature change portion P2 is denoted as a2. Here, in a case where the above-mentioned cross-sectional shape further satisfies the relational expression a1/W1 ≤ 0.06 < a2/W2 ≤ 0.15, the ground pressure from the tire equator line CL to the tread edge TE of the heavy load tire 100 for trucks and buses can be made more uniform in the tire width direction.

In addition, in the heavy load pneumatic tire 100 according to the present embodiment, the plural protrusions 19 that protrude outward in the tire width direction from the tire surface and extend in the circumferential direction are formed on the tire surface in the shoulder region where the tire side section 20 extends from the tread section 10. On the above-mentioned cross section, the curvature radius R2 of the second segment (P1-P2) of the carcass ply 40 and the curvature radius R3 of the carcass ply 40 located between the second curvature change portion P2 and the portion P3 located inside the tire width direction of the area where the plural protrusions 19 of the carcass ply 40 are provided are When the relational formula R2/R3≤0.5 is satisfied, ground pressure at the tread edge TE can be secured more reliably. Therefore, the uneven wear resistance of the heavy load pneumatic tire 100 in the width direction of the tire can be improved.

### (4) Examples

To confirm the advantages of the invention, estimated are uneven wear resistance performance and endurance performance against heat generation of heavy load pneumatic tires for buses and trucks having a basic structure shown in Fig. 1 and a size 11R22.5, based on specifications in a Table 1. Their tread patterns are identical. They are substantially identical except for parameters shown in Table 1. Among them, only the tire 1 is prototyped and its performances are tested. With respect to the tires 2 through 4, performances are estimated based on actual measurements of shapes of their contact patches.

**[Table 1]**

| | OPTIMIZATION OF GROUND CONTACT LENGTH | TW (mm) | a1 (mm) | a2 (mm) | W1 (mm) | W2 (mm) | R2 (mm) | R3 (mm) |
|---|---|---|---|---|---|---|---|---|
| TIRE 1 | NOT APPLIED | 107.5 | 4.5 | 18 | 68 | 100 | 100 | 90 |
| TIRE 2 | APPLIED | | | | | | | |
| TIRE 3 | NOT APPLIED | | 3 | 10.5 | 60 | 82 | 80 | 280 |
| TIRE 4 | APPLIED | | | | | | | |

With respect to the heavy load tires as the Examples, the tire 1 is a tire that uses a conventional case line and its circumferential ground contact length is not yet optimized. The tire 2 is a tire that uses a conventional case line but its circumferential ground contact length at a ground contact end, when it is brand-new, is elongated by a thickness of a rubber layer. The tire 3 is a tire that includes a case line of the present embodiment but its circumferential ground contact length is not yet optimized. The tire 4 is a tire that includes a case line of the present embodiment and its circumferential ground contact length at a ground contact end, when it is brand-new, is elongated by a thickness of a rubber layer.

Note that dimensions of a carcass profile of each tire of the Examples shown in the Table 1 are measured values obtained by CT scan under a regulated condition after they are mounted on a rim shown below.
Rim: 8.25 × 22.5

A method for estimating the heavy load tires is explained below.

### <Uneven Wear Resistance Performance>

Each tire of the Examples is installed to all wheels of a vehicle under conditions of rim (8.25 × 22.5), internal pressure (775 kPa), and load (25.80 kN), and road tests are done at actual use speed to estimate occurrence of shoulder drop wear at its shoulder region until 50% worn. The tire 1 has an issue with its uneven wear. Therefore, as an index of judgment criteria, when the amount of shoulder drop wear of the tire 1 is set to 1, "A" (excellent) is evaluated as 0.6 or less, "B" (good) as 0.8 or less, "C" (acceptable) as 1 or less, and "D" (not acceptable) as 1 or more.

### <Endurance Performance against Heat Generation>

The above-mentioned vehicle is used and driven at 90 km/hr until a failure occurs, and estimation is made based on a time unlit the failure occurs. The endurance performance against heat generation of the tire 1 fully satisfies the market requirements. Therefore, as an index of judgment criteria, when the driving time until the failure of the tire 1 occurs is set as 1, "A" (excellent) is evaluated as 1 or more, "B" (good) as 0.8 or more, "C" (acceptable) as 0.6 or more, and "D" (not acceptable) as less than 0.6.

**[Table 2]**

| | UNEVEN WEAR RESISTANCE PERFORMANCE | ENDURANCE PERFORMANCE AGAINST HEAT GENERATION |
|---|---|---|
| TIRE 1 | C | A |
| TIRE 2 | A | C |
| TIRE 3 | B | A |
| TIRE 4 | A | B |

As shown in a Table 2, it is difficult to obtain high ratings for both of the uneven wear resistance performance and the endurance performance against heat generation for the tires 1 and 2 with a conventional case line. On the other hand, the tires 3 and 4 with a case lines that satisfies the conditions of the present embodiment can achieve both of the uneven wear resistance performance and the endurance performance against heat generation.

Although the embodiment of the present invention is described above, various alternative embodiments, examples, and operational techniques within the scope of the appended claims will be apparent to those skilled in the art.

## Claims

1. A heavy load pneumatic tire (100) comprising:
a tread section (10) to be contacted with a ground surface;
a tire side section (20) that extends from the tread section (10) and is located inside the tread section (10) in a tire radial direction;
a bead section (30) that extends from the tire side section (20) and is located inside the tire side section (20) in the tire radial direction;
a carcass ply (40) that is mounted from the tread section (10) through the tire side section (20) to the bead section (30) to form a framework of the pneumatic tire (100); and
a belt layer (15) that is disposed in the tread section (10) and is located outside the carcass ply (40) in the tire radial direction,
wherein the carcass ply (40) includes
a first curvature change portion (P1) that is a boundary between a first segment (P0-P1) that contains a tire equator line (CL) and a second segment (P1-P2) that is located outside the first segment (P0-P1) in a tire width direction and inside the first segment (P0-P1) in the tire radial direction and whose curvature is larger than a curvature of the first segment (P0-P1) in a cross section determined by the tire width direction and the tire radial direction, and
a second curvature change portion (P2) that is a boundary between the second segment (P1-P2) and a third segment (P2-P3) that is located inside the second segment (P1-P2) in the tire radial direction and whose curvature is smaller than the curvature of the second segment (P1-P2) on the cross section,
wherein the tire further comprises a cushion rubber (17a) whose inner edge in the tire width direction is located at the first curvature change portion (P) and that is disposed between the carcass ply (40) and the belt layer (15); and
**characterised in that**, a shape of the heavy load pneumatic tire (100) on the cross-section satisfies a relational expression 0.5 ≤ W1/TW ≤ 0.8 and a relational expression W1/TW ≤ W2/TW < 1 in a state where no load is applied to the tire (100) while the tire (100) is mounted on a regulated rim and a regulated inner pressure, corresponding to the maximum load capacity according to JATMA, is applied to the tire (100), W1 denoting a distance in the tire width direction between the tire equator line (CL) and the first curvature change portion (P1), W2 denoting a distance in the tire width direction between the tire equator line (CL) and the second curvature change portion (P2), and TW denoting a distance in the tire width direction between the tire equator line (CL) and a tread edge (TE) of the tread section (10).

2. The heavy load pneumatic tire (100) according to claim 1,
wherein a relational expression a1/W1 ≤ 0.06 ≤ a2/W2 ≤ 0.15 is satisfied, a1 denoting a distance in the tire radial direction between a position of the carcass ply (40) in the tire radial direction on the tire equator line (CL) and a position of the first curvature change portion (P1) in the tire radial direction, and a2 denoting a distance in the tire radial direction between a position of the carcass ply (40) in the tire radial direction on the tire equator line (CL) and a position of the second curvature change portion (P2) in the tire radial direction.

3. The heavy load pneumatic tire (100) according to claim 1 or 2,
wherein a plural of protrusions (19) is provided on a tire surface in a shoulder region where the tire side section (20) extends from the tread section (10), the protrusions (19) protruding outward from the tire surface in the tire width direction and extending in a tire circumferential direction,
wherein the plural of protrusions (19) includes a first protrusion (19a) located at an outer end in the tire radial direction and a second protrusion (19b) adjacent to the first protrusion (19a), and
wherein a curvature radius R2 of the second segment (P1-P2) and a curvature radius R3 of the third segment (P2-P3) satisfy a relational expression R2/R3 ≤ 0.5 on the cross-section, the second segment (P1-P2) being segmented between the first curvature change portion (P1) and the second curvature change portion (P2) and the third segment (P2-P3) being segmented between the second curvature change portion (P2) and a midpoint (P3) on the carcass ply (40) in the tire radial direction between the first protrusion (19a) and the second protrusion (19b).

## Patentansprüche

1. Schwerlastluftreifen (100), der Folgendes umfasst:
einen Laufflächenabschnitt (10), der mit einer Bodenoberfläche in Kontakt kommen soll;
einen Reifenseitenabschnitt (20), der sich von dem Laufflächenabschnitt (10) erstreckt und sich in dem Laufflächenabschnitt (10) in einer radialen Richtung des Reifens befindet;
einen Wulstabschnitt (30), der sich von dem Reifenseitenabschnitt (20) erstreckt und sich in dem Reifenseitenabschnitt (20) in der radialen Richtung des Reifens befindet;
eine Karkassenlage (40), die von dem Laufflächenabschnitt (10) durch den Reifenflankenabschnitt (20) bis zu dem Wulstabschnitt (30) montiert ist, um ein Gerüst des Luftreifens (100) zu bilden; und
eine Gürtelschicht (15), die in dem Laufflächenabschnitt (10) angeordnet ist und sich außerhalb der Karkassenlage (40) in der radialen Richtung des Reifens befindet,
wobei die Karkassenlage (40) Folgendes einschließt
einen ersten Krümmungsänderungsabschnitt (P1), der eine Grenze zwischen einem ersten Segment (P0-P1), das die Reifenäquatorlinie (CL) enthält, und einem zweiten Segment (P1-P2) ist, das sich außerhalb des ersten Segments (P0-P1) in Reifenbreitenrichtung und in dem ersten Segment (P0-P1) in der radialen Richtung des Reifens befindet und dessen Krümmung größer ist als eine Krümmung des ersten Segments (P0-P1) in einem Querschnitt, der durch die Reifenbreitenrichtung und die radiale Richtung des Reifens bestimmt wird, und
einen zweiten Krümmungsänderungsabschnitt (P2), der eine Grenze zwischen dem zweiten Segment (P1-P2) und einem dritten Segment (P2-P3) ist, das sich in dem zweiten Segment (P1-P2) in der radialen Richtung des Reifens befindet und dessen Krümmung kleiner ist als die Krümmung des zweiten Segments (P1-P2) auf dem Querschnitt,
wobei der Reifen weiter einen Dämpfungsgummi (17a) umfasst, dessen Innenkante sich in der Reifenbreitenrichtung an dem ersten Krümmungsänderungsabschnitt (P) befindet und der zwischen der Karkassenlage (40) und der Gürtellage (15) angeordnet ist; und
**dadurch gekennzeichnet, dass** eine Form des Schwerlastluftreifens (100) auf dem Querschnitt einen relationalen Ausdruck 0,5 ≤ W1/TW ≤ 0,8 erfüllt und einen relationalen Ausdruck W1/TW ≤ W2/TW < 1 in einem Zustand, in dem keine Last auf den Reifen (100) angelegt wird, während der Reifen (100) auf einer geregelten Felge montiert ist und ein geregelter Innendruck ', der der maximalen Tragfähigkeit gemäß JATMA auf dem Reifen (100) entspricht, angelegt wird, wobei W1 einen Abstand in der Reifenbreitenrichtung zwischen der Reifenäquatorlinie (CL) und dem ersten Krümmungsänderungsabschnitt (P1) bezeichnet, W2 einen Abstand in der Reifenbreitenrichtung zwischen der Reifenäquatorlinie (CL) und dem zweiten Krümmungsänderungsabschnitt (P2) bezeichnet, und TW einen Abstand in der Reifenbreitenrichtung zwischen der Reifenäquatorlinie (CL) und einer Laufflächenkante (TE) des Laufflächenabschnitts (10) bezeichnet.

2. Schwerlastluftreifen (100) nach Anspruch 1,
wobei ein relationaler Ausdruck a1/W1 ≤ 0,06 ≤ a2/W2 ≤ 0,15 erfüllt ist, wobei a1 einen Abstand in der radialen Richtung des Reifens zwischen einer Position der Karkassenlage (40) in der radialen Richtung des Reifens auf der Reifenäquatorlinie (CL) und einer Position des ersten Krümmungsänderungsabschnitts (P1) in der radialen Richtung des Reifens bezeichnet, und a2 einen Abstand in der radialen Richtung des Reifens zwischen einer Position der Karkassenlage (40) in der radialen Richtung des Reifens auf der Reifenäquatorlinie (CL) und einer Position des zweiten Krümmungsänderungsabschnitts (P2) in der radialen Richtung des Reifens bezeichnet.

3. Schwerlastluftreifen (100) nach Anspruch 1 oder 2,
wobei auf einer Reifenoberfläche in einem Schulterbereich, in dem sich der Reifenseitenabschnitt (20) von dem Laufflächenabschnitt (10) erstreckt, eine Vielzahl von Vorsprüngen (19) bereitgestellt ist, wobei die Vorsprünge (19) in der Reifenbreitenrichtung von der Reifenoberfläche nach außen ragen und sich in einer Umfangsrichtung des Reifens erstrecken,
wobei die Vielzahl von Vorsprüngen (19) einen ersten Vorsprung (19a) einschließt, der sich an einem äußeren Ende in der radialen Richtung des Reifens befindet, und einen zweiten Vorsprung (19b), der an den ersten Vorsprung (19a) angrenzt, und
wobei ein Krümmungsradius R2 des zweiten Segments (P1-P2) und ein Krümmungsradius R3 des dritten Segments (P2-P3) einen relationalen Ausdruck R2/R3 ≤ 0,5 auf dem Querschnitt erfüllen, wobei das zweite Segment (P1-P2) zwischen dem ersten Krümmungsänderungsabschnitt (P1) und dem zweiten Krümmungsänderungsbschnitt (P2) segmentiert ist und das dritte Segment (P2-P3) zwischen dem zweiten Krümmungsänderungsabschnitt (P2) und einem Mittelpunkt (P3) auf der Karkassenlage (40) in der radialen Richtung des Reifens zwischen dem ersten Vorsprung (19a) und dem zweiten Vorsprung (19b) segmentiert ist.

## Revendications

1. Pneu pour charges lourdes (100) comprenant :
une section de bande de roulement (10) destinée à être en contact avec une surface au sol ;
une section latérale de pneu (20) qui s'étend à partir de la section de bande de roulement (10) et est située à l'intérieur de la section de bande de roulement (10) dans une direction radiale du pneu ;
une section de talon (30) qui s'étend à partir de la section latérale du pneu (20) et est située à l'intérieur de la section latérale du pneu (20) dans la direction radiale du pneu ;
une nappe de carcasse (40) qui est montée de la section de bande de roulement (10) à travers la section latérale du pneu (20) jusqu'à la section de talon (30) pour former une armature du pneu (100) ; et
une couche de ceinture (15) qui est disposée dans la section de bande de roulement (10) et est située à l'extérieur de la nappe de carcasse (40) dans la direction radiale du pneu,
dans lequel la nappe de carcasse (40) inclut
une première portion de changement de courbure (P1) qui constitue une limite entre un premier segment (P0-P1) contenant une ligne équatoriale du pneu (CL) et un deuxième segment (P1-P2) situé à l'extérieur du premier segment (P0-P1) dans le sens de la largeur du pneu et à l'intérieur du premier segment (P0-P1) dans le sens radial du pneu, et dont la courbure est supérieure à celle du premier segment (P0-P1) dans une section transversale déterminée par le sens de la largeur du pneu et la direction radiale du pneu, et
une seconde portion de changement de courbure (P2) qui constitue une limite entre le deuxième segment (P1-P2) et un troisième segment (P2-P3) situé à l'intérieur du deuxième segment (P1-P2) dans la direction radiale du pneu et dont la courbure est inférieure à la courbure du deuxième segment (P1-P2) sur la section transversale,
dans lequel le pneu comprend en outre une gomme de coussin (17a) dont le bord intérieur dans le sens de la largeur du pneu est situé au niveau de la première zone de changement de courbure (P) et qui est disposé entre la nappe de carcasse (40) et la couche de ceinture (15) ; et
**caractérisée en ce que** la forme du pneu pour charges lourdes (100) sur la section transversale satisfait une expression relationnelle 0,5 ≤ W1/TW ≤ 0,8 et une expression relationnelle W1/TW ≤ W2/TW < 1 dans un état où aucune charge n'est appliquée au pneu (100) tandis que le pneu (100) est monté sur une jante régulée et qu'une pression intérieure régulée ' correspondant à la capacité de charge maximale selon JATMA, est appliquée au pneu (100), W1 désignant une distance dans le sens de la largeur du pneu entre la ligne équatoriale du pneu (CL) et la première portion de changement de courbure (P1), W2 désignant une distance dans le sens de la largeur du pneu entre la ligne équatoriale du pneu (CL) et la deuxième portion de changement de courbure (P2), et TW désignant une distance dans le sens de la largeur du pneu entre la ligne équatoriale du pneu (CL) et un bord de bande de roulement (TE) de la section de bande de roulement (10).

2. Pneu pour charges lourdes (100) selon la revendication 1,
dans lequel une expression relationnelle a1/W1 ≤ 0,06 ≤ a2/W2 ≤ 0,15 est satisfaite, al désignant une distance dans la direction radiale du pneu entre une position de la nappe de carcasse (40) dans la direction radiale du pneu sur la ligne équatoriale du pneu (CL) et une position de la première portion de changement de courbure (P1) dans la direction radiale du pneu, et a2 désignant une distance dans la direction radiale du pneu entre une position de la nappe de carcasse (40) dans la direction radiale du pneu sur la ligne équatoriale du pneu (CL) et une position de la seconde portion de changement de courbure (P2) dans la direction radiale du pneu.

3. Pneu pour charges lourdes(100) selon la revendication 1 ou 2,
dans lequel une pluralité de protubérances (19) est prévue sur la surface du pneu dans une région d'épaulement où la section latérale du pneu (20) s'étend à partir de la section de bande de roulement (10), les protubérances (19) faisant saillie de la surface du pneu dans le sens de la largeur du pneu et s'étendant dans la direction circonférentielle du pneu,
dans lequel la pluralité de protubérances (19) inclut une première protubérance (19a) située à une extrémité extérieure dans la direction radiale du pneu et une seconde protubérance (19b) adjacente à la première protubérance (19a), et
dans laquelle un rayon de courbure R2 du deuxième segment (P1-P2) et un rayon de courbure R3 du troisième segment (P2-P3) satisfont une expression relationnelle R2/R3 ≤ 0,5 sur la section transversale, le deuxième segment (P1-P2) étant segmenté entre la première portion de changement de courbure (P1) et la seconde portion de changement de courbure (P2) et le troisième segment (P2-P3) étant segmenté entre la seconde portion de changement de courbure (P2) et un point médian (P3) sur la nappe de carcasse (40) dans la direction radiale du pneu entre la première protubérance (19a) et la seconde protubérance (19b).
